# EUROPEAN PATENT SPECIFICATION

(11) **EP 3 329 811 B1**
(45) Date of publication and mention of the grant of the patent: **18.09.2019**
(21) Application number: 17203237.7
(22) Date of filing: 23.11.2017
(51) Int. Cl.: A47J 31/40, A47J 42/50

(54) **A GRINDING-DOSING MACHINE WITH A DOSING DEVICE FOR GROUND COFFEE**
MASCHINE ZUM MAHLEN UND DOSIEREN MIT EINER DOSIERVORRICHTUNG FÜR GEMALENEN KAFFEE
APPAREIL DE BROYAGE ET DE DOSAGE AVEC UN DISPOSITIF POUR CAFÉ MOULU

(30) Priority: 02.12.2016 IT 201600122711
(43) Date of publication of application: 06.06.2018
(73) Proprietor: Gruppo Cimbali S.p.A., 20082 Binasco (MI) (IT)
(72) Inventor: ABBIATI, Giacomo, 20082 Binasco MI (IT)
(74) Representative: Perani & Partners S.p.A.

(56) References cited:
- WO-A1-2010/095937
- WO-A1-2015/006244
- US-A1- 2016 037 962

## Description

### Field of the invention

The present invention finds application in the field of grinding of coffee beans as is needed for preparation of a coffee beverage, e.g. espresso. Particularly, the invention relates to a grinding-dosing machine with a dosing device for accurate measurement of the doses of ground coffee.

### Background art

When preparing coffee beverages, such as espresso, coffee beans are first ground in a coffee grinder. Then the ground coffee are brewed using high-pressure hot water in a coffee machine. The ground coffee ejected by the coffee grinder is carried to the coffee machine into a filter holder, in which it is held even during preparation and dispensing of the beverage.

In order to obtain a coffee of the desired type, optimal adjustment of process parameters is relevant, such as the degree of grinding of coffee beans, pressing of the ground coffee amount of ground coffee in use, proper ground coffee-to-water ratio, and water temperature and pressure.

IT 1187064, for example, discloses an automatic coffee machine for dispensing coffee, which provides a consistent volume of brewed beverage and allows dispensing to be measured with time, such that the user is promptly given an indication of the quality of the dispensed coffee.

On the other hand, ES1089030 discloses a coffee grinder that incorporates a graduated transparent tube, allowing the amount of coffee that is being ground to prepare a single coffee dose. Therefore, the barista will receive a visual check of the amount of ground coffee, and will thus decide when he/she will manually act to turn off the coffee grinder and stop grinding the coffee beans. The coffee dose is checked based on the volume of coffee that has been ground.

Further coffee grinders, like the one as disclosed in EP2314188 adjust the coffee dose to be fed to the filter holder based on preset grinding times. Namely, the coffee grinder as disclosed in this document may recognize the filter holder in use and autonomously decide the dose of ground coffee to be dispensed. Each filter holder is associated with a coffee dispenser, which dispenses coffee according to a predetermined recipe and, as the coffee grinder recognizes the filter holder, it will provide a provide a predetermined amount of ground coffee, e.g. a single or a double dose, associated with the recipe.

WO 2015/006244 discloses a coffee grinder equipped with a load cell that supports a fork for the barista to lay the filter holder thereon while the latter is being filled with ground coffee. This will deform the load cell, and as its deformation is measured, the grinder will be able to provide a measurement of the mass of the filter holder containing the ground coffee to the barista. Therefore, the mass of the ground coffee is obtained by subtracting the mass of the empty filter holder from the measured value. The coffee grinder as disclosed in this document also provides arrangements to preserve the load cell from impacts that might damage it, particularly when the barista lays the filter holder on the fork. This is because the load cell should not be exposed to stresses that are too higher than those expected for weighing.

US 2016/0143481 addresses a coffee grinding machine comprising a dispensing conduit connected to a grinder unit for dispensing coffee into a filter supported by a filter holder supported by a platform, wherein a load cell is connected to the support platform for weighing the amount of coffee contained in the filter. The load cell is electrically connected to a control unit that receives signals indicative of the weight of coffee and is configured to stop the grinder unit when the weight of the coffee attains a predetermined value.

### Summary of the Invention

The Applicant found that measurement of the mass of the ground coffee provides, in many cases of interest, more accurate dosing as compared with the control of the grinding time or the volume of ground coffee. Volume-based control may be inaccurate, as the mass of ground coffee in a predetermined volume may vary according to the degree of grinding. Furthermore, a visual check of the height of the ground coffee in a graduated test tube may be difficult due to uneven distribution of ground coffee, due for example to accumulation. In addition, visual checks cannot account for density differences caused by different particle sizes or moisture, Here, density differences may not appear as a level change in the doser, whereas weight may be different.

Grinding time control may also lead to dispensing of inaccurate doses of ground coffee for various reasons. This is because coffee beans may form agglomerates due to the effect of grease on the grains; furthermore, the coffee grinder is prone to wear, which leads to a time-dependent degradation of its operation parameters. Similar problems may cause changes in the degree of grinding or irregular sliding of the outflowing ground coffee from the coffee grinder, leading to dosing errors.

While the arrangements as disclosed in WO 2015/006244 and US 2016/0143481 provide the possibility of measuring the mass of ground coffee, the Applicant found that, since the devices as disclosed therein effect measurements with the weight of the filter holder supported by the load cell, the mass of the empty filter holder has to be precisely known. One coffee grinder is generally used with various filter holders, which usually have different masses. It shall be noted that a filter holder may weigh a few hundred grams, and a dose of ground coffee is generally a few grams. Therefore, even slight mass differences between two filter holders, possibly of the same type, may be significant as compared with the weight of the coffee to be dosed.

This disclosure provides a grinding-dosing machine with dosing device that can weigh the ground coffee before introduction thereof into the filter holder. Namely, the ground coffee are introduced into a conduit, where they build up, and are discharged into the filter holder as soon as the desired mass is reached. The dispensing conduit and, as a result, the ground coffee that have built up therein, hang from a load cell, which measures their mass. This will afford accurate measurement and dosing of the mass of ground coffee.

Advantageously, the unladen mass as measured by the load cell is constant, which allows a single measurement to be taken during calibration of the load cell. Therefore, the load cell may be set to indicate a zero mass in a no-load measurement condition. Therefore, the mass that is being measured and indicated when ground coffee are present directly corresponds to the net mass of the ground coffee, and there is no need to check the unladen mass, e.g. the mass of the filter holder, at each weighing, i.e. before dispensing the ground coffee.

Preferably, the load cell operates in a relatively narrow range of values and provides adequately precise measurements. The load cell initially supports a main body that comprises the dispensing conduit and the mass of the ground coffee is simply later added to such mass. Therefore, the mass increase recorded by the cell during measurement is only equal to the quantity to be measured, i.e. the mass of the ground coffee. As a result, from an equilibrium position assumed by the load cell before grinding, the load cell is subjected to a small deformation when the ground coffee are present.

Certain embodiments provide a grinding-dosing machine with dosing device with improved impact protection of the load cell, leading to a more reliable and sturdy dosing device, and preventing the cell from being subjected to stresses that do not fall in the operating range of the load cell, such range being preferably narrow.
The present disclosure provides a grinding-dosing machine comprising:
- a grinding device, configured to grind coffee beans and deliver ground coffee, said grinding device comprising a grinder unit, and a grinder motor for driving said grinder unit,
- a dosing device for ground coffee, configured to receive the ground coffee delivered by the grinding device,
characterized in that said dosing device for ground coffee comprises:
- a main body, comprising:
   a) a dispensing conduit with an inlet configured to receive ground coffee, and an outlet configured to allow ground coffee to be discharged from the dispensing conduit, the ground coffee falling by gravity through the inlet along the dispensing conduit,
   b) a closure member movable between a closed position to close the outlet and allow ground coffee to build up in the conduit and an open position, in which ground coffee can be discharged through the outlet,
- a load cell having a first free end portion connected to the main body for supporting in suspension the main body, the load cell being configured to measure the weight of the ground coffee built up in the dispensing conduit when the closure member is in the closed position, and to generate a measurement signal representative of the measured weight of the ground coffee, and
- an electronic control unit connected to the load cell and the grinder motor and configured to receive the measurement signal generated by the load cell and to turn off the grinder motor as a function of the value of said measurement signal.
   Preferably, the control unit is configured to turn off the grinder motor when the value of the measurement signal reaches a preset value that is stored in the electronic control unit.
   Preferably, the load cell comprises a second end portion opposite to the first end portion, the dosing device comprises a stationary support structure, external to the main body, the support structure being fixed to the second end portion of the load cell to support the load cell and hence the main body.
   Preferably, the load cell comprises at least one flexible portion arranged between the first end portion and the second end portion,
- said at least one flexible portion being configured to deform under the weight applied to the first end portion.

Preferably, the load cell is configured to measure the weight of the ground coffee built up in the dispensing conduit by difference between a gross weight of the main body, as measured with the ground coffee in the conduit and a tare that is equal to the weight of the main body when no ground coffee are in the conduit, as measured when the dispensing conduit is empty.

Preferably, the load cell is configured to indicate a zero weight when no ground coffee are present in the dispensing conduit.

Preferably, in the inlet of the dispensing conduit is configured to receive ground coffee from a grinding device connected with said inlet of the conduit.

Preferably, the closure member is located at the outlet.

Preferably, the closure member is pivotally connected to the load transfer structure.

Preferably, the dispensing conduit extends in the vertical direction between in the inlet and the outlet.

Preferably, the load cell is a bending beam load cell.

Preferably, the load cell is connected to the control unit and is configured to generate a measurement signal representative of the measured weight of the ground coffee, e.g. a voltage signal proportional to the deformation of the deformation of the end flexible portion.

Preferably, the main body comprises a drive system, which is coupled to the closure member and is connected to the electronic control unit to drive the closure member between the open position and the closed position. Preferably, the drive system comprises a motor, driven by the electronic control unit and connected to the closure member and the electronic control unit is configured to control the movement of the closure member from the closed position to the open position and vice versa.

Preferably the drive system is fixed to the load transfer structure.

In one embodiment, the electronic control unit is connected to a user interface and is configured to receive input data from the user interface.

In certain embodiments, the dosing device comprises a panel that is attached to the second end portion of the load cell to support the load cell and hence the main body. Preferably the panel has a main extension in a vertical plane and is attached to the load transfer structure.

Preferably, the first end portion of the load cell is cantilevered from the panel.

Preferably, the second end portion is cantilevered from said panel.

Preferably, the panel is substantially flat and has a vertical orientation (particularly parallel to the longitudinal direction of the conduit) such that at least the dispensing conduit and the closure member project out of the panel in cantilever fashion.

In certain embodiments, the load transfer structure comprises an opening that is configured to allow the passage of the load cell through the opening. Preferably, the panel, if any, has an opening arranged at the opening of the load transfer structure and configured to allow the passage of the load cell through the panel opening and the structure opening.

Preferably, the panel has an opening, for the passage of the load cell through the opening, the first and second end portions of the cell being arranged in facing relationship to two opposite larger surfaces of the panel and projecting out of them in cantilever fashion.

Preferably, the grinding-dosing machine further comprising a retaining support which is configured to support and/or mechanically connect a filter holder, wherein the dosing device is placed above the retaining support, with the outlet of the dispensing conduit facing the retaining support, for the ground coffee to be discharged into the filter holder when the latter is placed on the retaining support and the closure member is in the open position.

Preferably, the grinding device comprises a connecting conduit which communicates with the grinder unit and is connected to the inlet of the dispensing conduit. The connecting conduit is adapted to receive the ground coffee from the grinder unit and to introduce the ground coffee into the dispensing conduit of the dosing device.

In one embodiment, the frame of the grinding-dosing machine comprises a base and the support structure, with the second end portions of the load cell fixed thereto, is mechanically connected to the base. Preferably, in this embodiment, the support structure is a portion of the frame.

In one embodiment, the dosing device comprises a panel which is fixed to the second end portion of the load cell to support the load cell, the panel being in turn fixed to a portion of the frame, the portion of the frame acting as a support structure external to the main body.

Preferably, the control unit is connected to the grinder unit, the load cell and the drive system for driving the closure member.

In one embodiment, the grinding-dosing machine comprises a presence sensor, which is configured to generate an electric signal for notifying the presence of the filter holder when the filter holder has been placed in the retaining support, wherein the electronic control unit is connected to the presence sensor to detect the presence of a filter holder.

A method of dispensing a dose of ground coffee is also disclosed herein.

### Brief description of the figures

Further features and advantages of the grinding-dosing machine of this invention, will be apparent from the following description of one preferred embodiment thereof, which is given by way of illustration and without limitation with reference to the accompanying figures, in which:
- Figure 1 shows a perspective view of a dosing device of a grinding-dosing machine according to one embodiment of the present invention,
- Figure 2 shows a perspective view of the dosing device of Figure 1, which comprises a support frame according to a further embodiment of the present invention,
- Figure 3 shows a rear perspective view of the dosing device of Figure 2,
- Figure 4 shows a side perspective view of the dosing device of Figure 2,
- Figure 5 schematically shows a detail of a dosing device according to one embodiment of the present invention,
- Figure 6 shows a perspective view of a grinding-dosing machine according to a preferred embodiment of the present invention,
- Figure 7 shows a block diagram of a system for controlling grinding and weighing of the ground coffee with reference to the grinding-dosing machine of Figure 6,
- Figure 8 shows a schematic view of an example of a filter holder.

### Detailed description

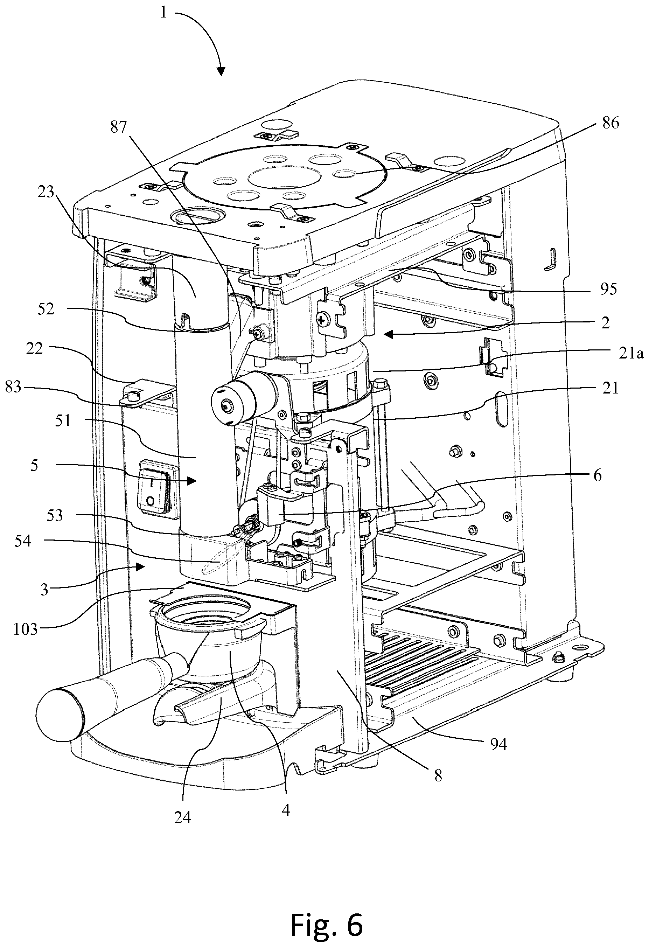

Figure 6 is a perspective view of a coffee grinding-dosing machine, according to one embodiment of the invention. The grinding-dosing machine 1 comprises a coffee bean grinding device, or grinding device 2 and a dosing device 3.

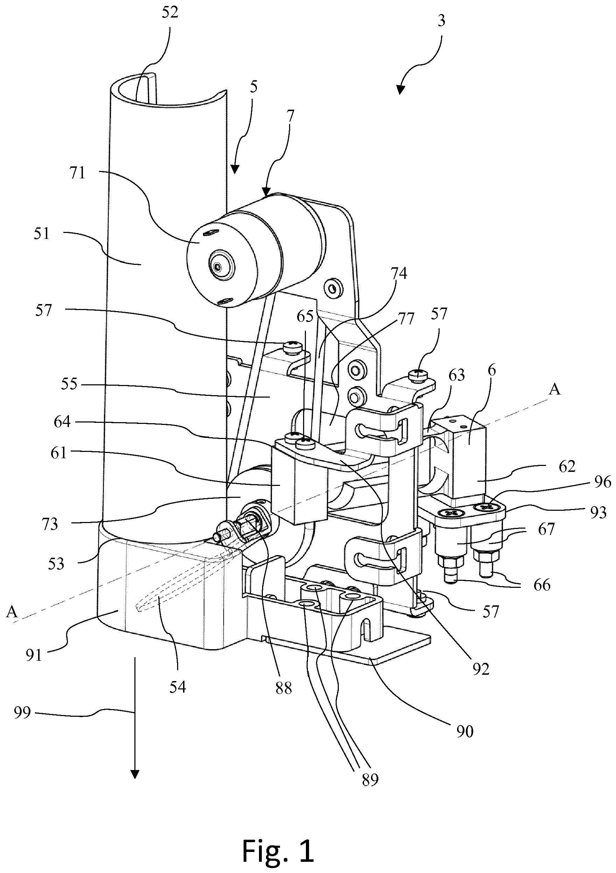

Figure 1 shows a perspective view of a dosing device 3 according to one embodiment of the present invention. The dosing device 3 comprises a main body 5. The main body 5 comprises a conduit 51 having one inlet 52 and one outlet 53. The inlet 52 is configured to receive ground coffee, e.g. from a coffee grinding device. The outlet 53 of the conduit 51 is configured to allow ground coffee to be discharged from the conduit 51. The conduit 51 preferably extends in the vertical direction between the inlet 52 and the outlet 53. The ground coffee received through the inlet 52 fall by gravity along the conduit 51 out of the outlet 53.

In certain embodiments, the dosing device 3 is configured to discharge predefined doses of ground coffee. The dosed ground coffee discharged from the dosing device 3 may be collected in a filter holder, typically supported by a coffee grinder fork (not shown in Figure 1).

The main body 5 of the dosing device 3 comprises a closure member 54 which is preferably placed at the outlet 53 of the conduit 51. The closure member 54 is movable to switch between a closed position and an open position. In the embodiment as shown in the figures, the closure member 54 is a plate, e.g. a steel plate.

In the closed position, the closure member 54 prevents ground coffee from being discharged out of the outlet 53 and allows ground coffee to build up in the conduit 51. In the closed position, the closure member closes the outlet 53 and supports the ground coffee built up in the conduit 51. Conversely, in the open position, the closure member leaves the outlet 53 open, allowing ground coffee to be discharged from the conduit 51 through the outlet, in the direction of the arrow 99.

In the examples as shown in Figures 1-4, the plate 54 is mounted to a pin 88 which acts as a fulcrum for pivoting about an axis of rotation AA, and switching between the closed position and the open position is performed by rotating the plate from a horizontal position in which it closes the outlet of the conduit and a vertical position (substantially along the main direction of extension of the conduit i.e. the direction 99) in which the plate leaves the outlet 53 open.

According to the present invention, the dosing device 3 comprises a load cell 6, which is configured to measure the weight of the ground coffee built up in the conduit 51 of the main body 5 when the closure member 54 is in the closed position. Conventionally, the dosing device 3 is configured to generate electric measurement signals representative of the weight of the coffee built up in the dispensing conduit.
An electronic control unit 97 is connected to the load cell 6 and the grinder motor 21 and configured to receive the measurement signal generated by the load cell 6 and to turn off the grinder motor 21 as a function of the value of said measurement signal.
Preferably, the control unit 97 is configured to turn off the grinder motor 21 when the value of the measurement signal reaches a preset value that is stored in the electronic control unit 97.
Preferably, the load cell 6 comprises a second end portion 62 opposite to the first end portion 61 and the dosing device 3 comprises a stationary support structure 8, external to the main body 5, the support structure 8 being fixed to the second end portion 62 of the load cell 6 to support the load cell 6 and hence the main body 5.

Preferably, the load cell is a bending beam load cell (e.g. a shear beam load cell).

The load cell 6 generally comprises at least one flexible portion (62) arranged between the first end portion 61 and the second end portion 62, and configured to deform under the weight applied to the first end portion 61. Furthermore, the load cell 6 may comprise one or more strain gages (not shown) applied to the flexible portion 63 and configured to generate a voltage signal proportional to the deformation of the flexible portion 62. Strain gages may be, for example, deformable resistors connected in a Wheatstone-bridge configuration, according to known techniques.

The electronic control unit (97), preferably a central processing unit (CPU), is configured to receive the measurement signals representative of the load applied to the cell. For example, the load cell 6 is electronically connected to the control unit 97 which receives voltage signals proportional to the deformation of the load cell 6.

The first end portion 61 is free and is connected to the main body 5 of the dosing device 3 in such a manner as to support the main body 5 in hanging relation. In other words, the main body 5 hangs from the first end portion 61 of the load cell 6. Thus, the weight of the main body 5 and of the coffee built up in the main conduit 51 rests completely on the load cell 6, thereby causing the deformation of the flexible portion 62 and thus allowing the measurement of such weight, e.g. by means of the strain gages.

The load cell 6 is preferably configured to measure the weight of the ground coffee built up in the conduit 51 of the main body 5 by difference between a gross weight of the main body 5, as measured when there are ground coffee in the conduit 51 of the main body 5, and a tare constituted by the main body 5 itself with no ground coffee in the conduit. The tare, that may be measured when the conduit 51 of the main body is empty, may be thus represented by a constant numerical value. Therefore, the load cell 6 may be configured to indicate a zero weight when no ground coffee are present in the conduit 51. The measurement signals transmitted by the load cell to the CPU are representative of the weight of the coffee built up in the conduit.

Reference will be made hereinbelow to a constant tare, with the technical meaning as described above.

As further discussed hereinafter, the second end portion 62 of the load cell 6 during use is fixed, particularly by means of a stable connection with a structure external to the main body, referred to hereinafter as support structure, e.g. a non-hanging panel or frame, such as a frame of a grinding-dosing machine that comprises the dosing device of the present disclosure.

In a preferred embodiment, the main body 5 comprises a load transfer structure 55. In the embodiment as shown in the figures, the load transfer structure 55 is shaped as a suitably shaped plate. Preferably, the load transfer structure 55 has a vertically-oriented main plane of extension (i.e., parallel to the main direction of extension of the conduit 51) and comprises at least one connecting portion 92 projecting out of the main plane of extension for attaching the structure 55 to the load cell 6, particularly the first free end portion, 61 of the cell 6. More generally, the load transfer structure 55 is attached to the first end portion, 61 of the cell 6, as discussed in greater detail below.

In the embodiment as shown in the figures, the load transfer structure 55 comprises an opening 77 which is configured to receive the load cell 6 in a transverse position across the opening. The load cell 6 is arranged to project out of the main plane of extension of the load transfer structure 55, and particularly both end portions of the load cell are arranged to project out of the main plane of extension of the load transfer structure.

The dispensing conduit 51 and the closure member 54 are engaged on the load transfer structure 55, and are particularly attached to it. For example, the conduit 51 is attached to the load transfer structure 55 through first fastener elements.

In the exemplary implementation of the figures, the main body 5 comprises an outlet connection element 91 disposed at the outlet 53 of the dispensing conduit 51 and connected to the outlet. Preferably, the outlet connection element 91 is formed of one piece with the conduit 51. The outlet connection element 91 is hollow and has an opening at the outlet 53 of the conduit to allow ejection of the ground coffee from the conduit through the connection element.

In the illustrated embodiment, without limitation, the outlet connection element 91 extends outside the conduit 51, in a main direction perpendicular to the longitudinal axis of the conduit 51. A first connecting flange 90, which projects out of the main plane of extension of the structure 55, is attached to the structure or is integral with the structure. The first connecting flange 90 is configured to support the outlet connection element 91, and be attached thereto by first fastener means 89 (e.g. a plurality of screws into a fastening box). Accordingly, the conduit 51 is supported by the load transfer structure 55 through the outlet connection element 91, the first fastener means 89 and the first connecting flange 90.

It shall be understood that other methods of connection, namely fixation, may be provided between the dispensing conduit 51 and the load transfer structure 55, other than those as shown in the figures. Particularly, the outlet connection element 91 is optional, and the connection flange 90 is also optional.

In the embodiments of Figures 1-4, the plate 54 is attached to the load transfer structure 55 by means of a pivot or pin 88 for pivoting about the axis AA, which moves the plate 54 from the closed position to the open position.

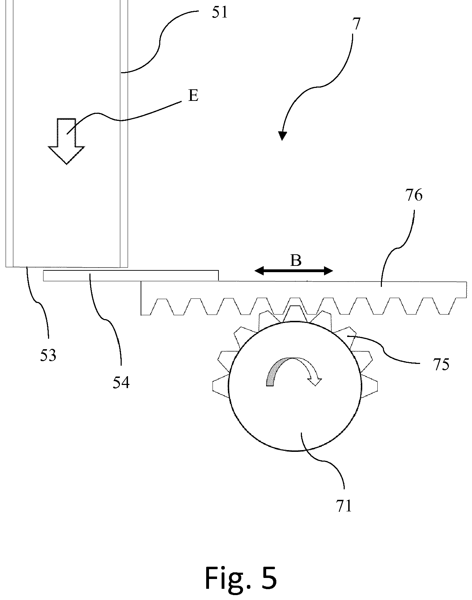

In an alternative embodiment, a detail whereof is schematically shown in Figure 5, described in further detail hereinbelow, the closure member 54 is movable relative to the load transfer structure 55 in a straight direction, e.g. a horizontal direction.

The load transfer structure 55 is attached to the first end portion 61 of the load cell 6. Particularly, the first end portion, 61 of the cell 6 comprises a supporting surface 64 for application of bending stresses.

In the illustrated example, the load transfer structure 55 is attached to such bearing surface 64 by means of second fastener elements 65, e.g. screws. Particularly, the connection portion 92 of the structure 55 is attached to the first end portion 61 of the cell 6. Thus, the load transfer structure 55 is supported in hanging relationship on the support surface of the load cell 6 and in turn, the dispensing conduit 51 and the closure member 54 are constrained to the load transfer structure 55, and are hence supported by the load cell 6 in hanging relationship through the structure 55.

As mentioned above, the second end portion 62 of the load cell 6 can be fixed to a support structure for supporting the load cell 6, which supports the main body 5 in hanging relationship by its free first end portion. It will be appreciated that the support structure does not hang from the load cell 6. Preferably, the support structure rests on or is attached to a base.

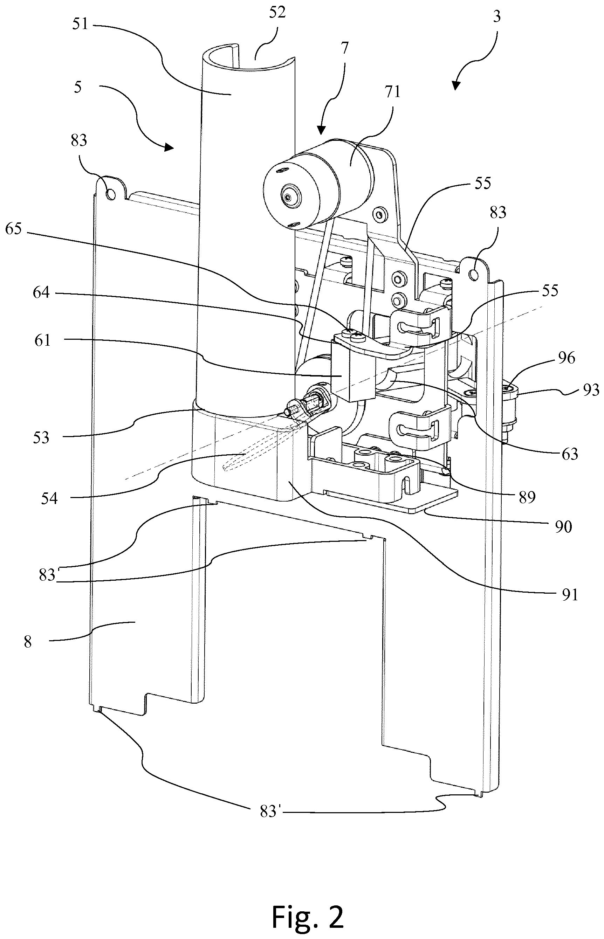

Referring to the embodiment of Figures 2-4, the support structure, which is external to the main body, is a panel 8 that is supported or fixed to a base, in the work position of the dosing device, to thereby support the main body. Preferably the panel 8 is formed as a suitably shaped plate. The second end portion 62 of the load cell 6 is attached to the panel 8 of the dosing device 3. The panel 8 is preferably a substantially flat panel, which is located behind the load transfer structure 55, and with a vertical orientation, for the main body 5 to be arranged to project out of the panel 8. In the illustrated embodiments, the main body 5 comprises at least one portion projecting out of the panel 8, such portion comprising at least the conduit 51 and the closure member 54.

The panel 8 of the dosing device 3 may be stably supported or be mechanically connected to a frame (not shown in Figures 1-5) of a grinding-dosing machine, which comprises the dosing device 3. The second end 62 of the load cell 6 may be connected to the frame either indirectly through the panel 8 of the dosing device 3 (like in the example as shown in the figures) or directly.

The panel 8 supports the load transfer structure 55. Since the panel 8 rests on a base and/or is attached to a frame, it is not weighed by the load cell 6.

Preferably, the load cell 6 is arranged to project out of the panel 8. The panel 8 has an opening 82, at the opening 77 of the load transfer structure 55, for the passage of the load cell 6 through the openings, with the load cell 6 not contacting the edge of the opening 82, to avoid measurement errors.

The panel 8 is attached to the load transfer structure 55 and hence to the main body 5 by the second end portion 62 of the load cell 6. Since no other constraint points are provided between the load cell and a structure external to the main body, the load transfer structure is supported in hanging relationship on the flexible and free first end portion 61 of the load cell and is free to move relative to the panel 8.

The Applicant noted that an accidental impact on the main body 5 may cause deformation of the load cell 6 and/or a movement of the main body relative to the support structure of the body, such as the panel 8. Preferably, the movement of the load transfer structure and hence the main body is vertically restricted by first limit-stop elements, and more preferably is also horizontally restricted by second limit-stop elements. The first limit-stop elements, and the second limit-stop elements, if any, are configured to restrict the movement of the main body 5 and the panel 8 relative to each other, to thereby protect the load cell 6 from excessive deformations as a result of impacts.

In the embodiment as shown in the figures, first limit-stop elements comprise limit-stop screws 57 and respective abutment surfaces 84. The screws 57 of the first limit-stop elements are arranged in such a manner as to be spaced from the abutment surfaces 84 when no impact occurs, and to contact their respective abutment surfaces 84 in the case of impacts, to thereby restrict the movement of the main body 5 and the panel 8 relative to each other. Namely, the limit-stop screws 57 are fixed to the upper portion and the lower portion of the load transfer structure 55, and particularly to respective flanges formed in the structure 55 at respective holes in the panel 8. For example, the abutment surfaces 84 horizontally project out of the panel 8. Each screw 57 of the main body 5 has an abutment surface 84 of the panel 8 corresponding thereto, to allow the main body 5 to move relative to the panel in the vertical direction before stopping its movement.

Preferably, the movement of the main body is restricted in the horizontal direction by second limit-stop elements, for instance limit-stop screws 85 attached to the panel 8, proximate to the vertical walls of the load transfer structure. Each screw 85 of the panel 8 has an abutment surface of the main body 5 corresponding thereto, for instance a vertical portion of the load transfer structure 55.

It shall be appreciated that, by defining the load transfer structure that holds the main body (open conduit) as the tare, the movement caused by (further) bending of the free end portion of the load cell for weighing the ground coffee is relatively small, considering typical ground coffee masses dispensed into a filter holder ranging from 5 to 30 grams.

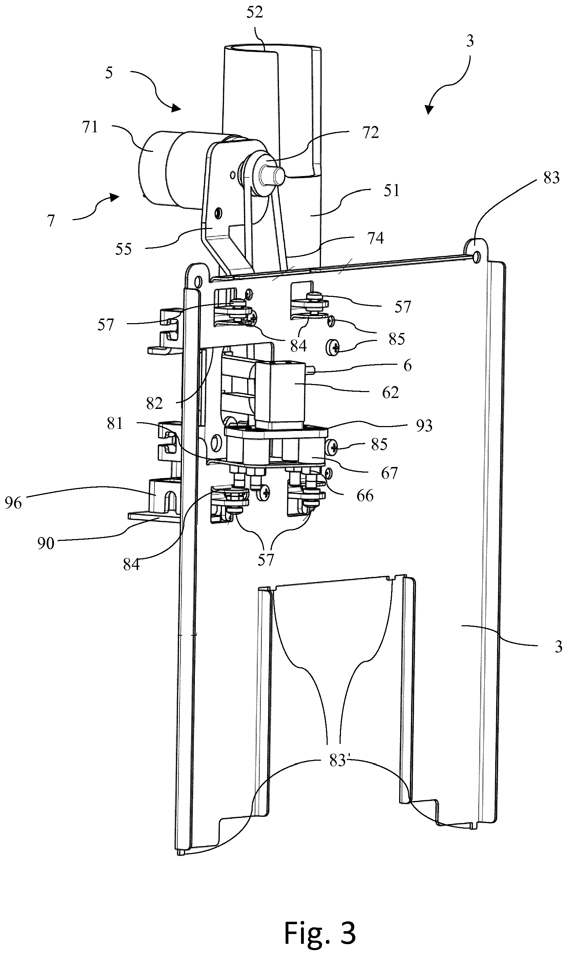

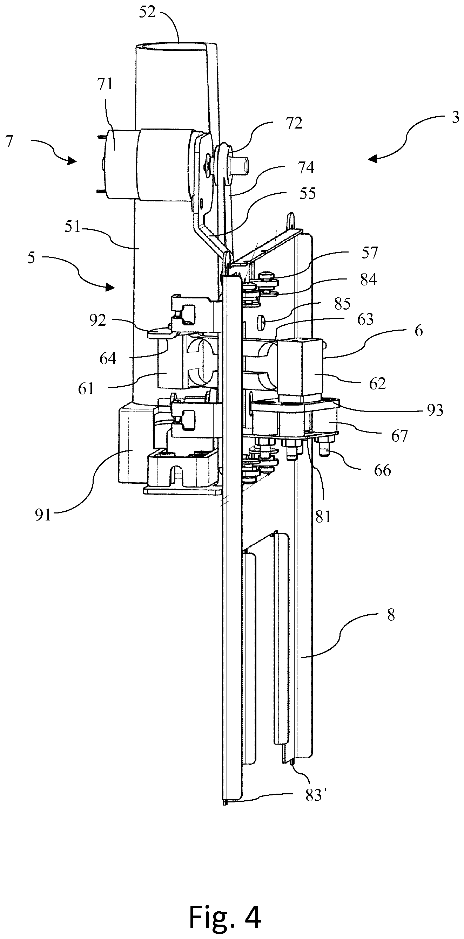

In the exemplary implementation as shown in the figures, the second end portion 62 of the load cell 6 is attached to the back surface of the panel 8, opposite to the front surface on which the load transfer structure 55 is arranged to project (as shown in Figures 3 and 4). The panel comprises a connection flange 81, projecting out of the main plane of extension of the panel 8, which can be made by cutting and bending a portion of the panel 8. The second end portion 62 of the load cell 6 rests on, and is preferably fastened to a plate 93 that rests on the connection flange 81, disposed below and parallel to the plate 93 and spaced from the latter through the use of damping elements 67. The ends of these damping elements are fastened to the plate 93 and the flange 81, for example by means of screws 92 (as shown in Figure 2) and nuts 66 respectively.

It shall be understood that other ways of fastening the second end portion 62 of the load cell 6 are possible. For example, the second end portion may be fixed to a flange, which is in turn fixed to the back surface of the panel (not shown). The damping elements 67 are optional and the provision of both a plate and a flange for attaching the second end 62 of the load cell to the panel is also optional.

As discussed in greater detail below, in certain embodiments, the panel 8 is preferably configured for connection with a support structure that is external to the dosing device. For this purpose and according to the example of figures 2-4, the panel has connection elements 83 and 83'.

Preferably, the main body 5 comprises a drive system 7 which is configured to move the closure member 54 between the open position and the closed position. The drive system 7 is connected, preferably fixed, to the load transfer structure 55. It will be appreciated that the mass as measured by the load cell 6 is also inclusive of the mass of the drive system 7. Preferably, the drive system 7 comprises a motor 71 connected to the plate 54.

In the embodiment as shown in Figures 1 to 4, the drive system 7 comprises a first pulley 72 driven by the motor 71, a second pulley 73 which is fixed to the pivot 88 and pivots relative thereto, to thereby rotate the closure member 54, and a drive belt 74 for transferring the rotary motion from the first pulley 72 to the second pulley 73, i.e. from the motor 71 to the closure member 54, to thereby move the closure member 54 between the open position and the closed position.

In a further embodiment, as schematically shown in Figure 5, the drive system 7 comprises a cogwheel 75 coupled to a motor 71, and a rack 76. The rack 76 cooperates with the cogwheel 75 to convert the rotary motion of the toothed wheel into a rectilinear motion, such that the motor 71 will move the closure member 54, for instance a plate, between the open position and the closed position in the direction B, in both ways. The direction of movement of the plate is horizontal, i.e. perpendicular to the main extent of the dispensing conduit 51. The arrow E indicates the direction of discharge of ground coffee along the dispensing conduit.

In certain embodiments, the control unit 97 is configured to actuate the drive system 7, and in particular the motor 71, to thereby move the closure member 54 to the open position when the weight of the ground coffee reaches a preset value.

The grinding device 2 has known characteristics, some of which are described in any case, for better understanding of the operation of the dosing device 3.

The grinding-dosing machine comprises a vessel (not shown in figure 6), for instance formed as a hopper, in which coffee beans can be deposited for later grinding, and which can be coupled to a coupling member 86. The grinding device is in communication with the vessel to receive the deposited coffee beans therefrom. The grinding device comprises a grinder unit (21a) which is designed to be driven by a grinder motor 21. Conventionally, the grinder unit 21a comprises one or more grinding wheels (e.g. A pair of flat or cylindrical grinding wheels) or one or more relatively rotating blades for grinding coffee beans.

The grinding-dosing machine 1 comprises a frame 95 that supports the bean-containing vessel and the grinding device 2. The frame 95 comprises a base 94 upon which the machine lies. The ground coffee are ejected from the grinder unit 21a which is connected with the inlet 52 of the dispensing conduit 51 of the dosing device 3. Particularly the grinder unit 21a introduces ground coffee into a connecting duct, e.g. a chute 87, connected to the dispensing conduit 51.

An optional conduit 23 connects the dispensing conduit 51 to the upper surface of the grinder-doser 1 to afford cleaning thereof without disassembling the machine.

The machine 1 further comprises a retaining support 24, which is configured to support and/or mechanically connect a filter holder 4. For example, the retaining support is a fork, on which the filter holder is laid. Preferably, the outlet 53 of the conduit 51 faces the retaining support 24 to allow ground coffee to be discharged into the filter holder that rests on or is connected to it, when the closure member 54 is in the open position. The dispensing device 51 is placed on top of the filter holder retaining support 24.

The panel 8 is mounted in the housing of the machine 1 and is mechanically connected to a support structure of the machine 1, which is external to the dosing device. In Figure 6, the panel 8 is attached to a portion 22 of the frame 95 of the machine by means of connecting elements 83. In the embodiment of Figure 6, the panel 8 comprises second connecting elements, e.g. coupling teeth 83', as shown in Figures 2 and 4, for the panel 8 to be coupled to the base 94 of the grinding-dosing machine 1 and preferably, to an optional sealing flange 103 of the filter holder 4.

In another embodiment, the panel 8 is only attached to the base 94 of the frame of the machine 1.

It shall be understood that the load transfer structure 55 may be supported and/or mechanically connected to a panel 8 having a configuration other than that shown in the figures or, as mentioned above, be supported and/or directly connected to a support structure external to the dosing device 3, such as a frame of a machine that houses the dosing device. In the latter case, the panel 8 will not be necessarily provided.

More generally, it shall be intended that the second end portion 62 of the load cell is or is able to be fixed to a support structure external to the main body 5 to thereby support the main body not in hanging relationship.

In one embodiment (not shown), the second end portion 62 is directly attached to a portion of frame 95 of the grinding-dosing machine.

It shall be noted that, since the filter holder 4 is not designed to rest on any part of the main body 5 or the load cell 6, the dosing device 3 may be configured in such a manner that the mass of the main body 5 will remain substantially constant throughout the useful life of the dosing device 3 or at least for an extended use of the device.

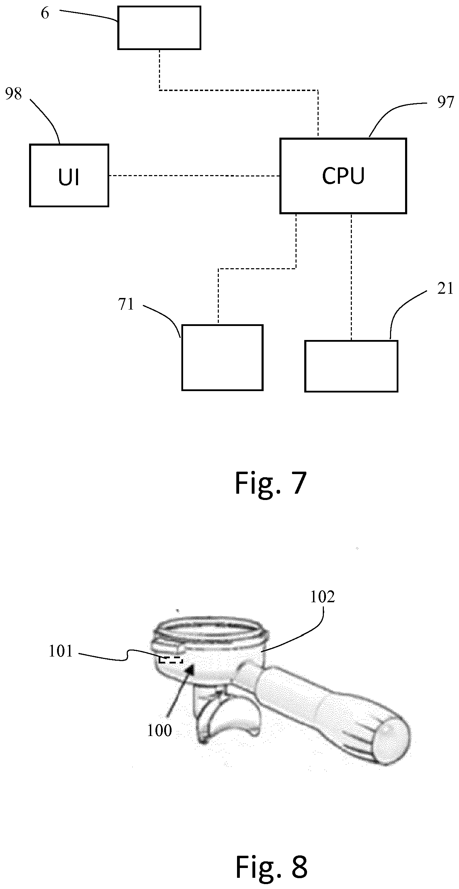

Figure 7 is a block diagram of a system for controlling grinding and weighing of the ground coffee. The grinding-dosing machine is equipped with an electronic control unit, e.g. a central processing unit (CPU) 97 and a user interface 98 which is electronically connected to the control unit. Conventionally, the user interface may be a touch-screen display or a keypad through which the user can input commands and/or enter input data. The control unit, which is usually housed in the machine and the user interface, typically arranged on an outer front panel of the machine for easy access by a user, are not shown in figure 6. The motor 21 of the grinder unit 21a and the motor 71 that moves the plate 54, as schematically shown in figure 7, are controlled by the control unit 97. The CPU is configured to receive measurement signals representative of the weight by the load cell 6 and to transmit control signals to the load cell, the motor of the grinder unit 21a and the motor for driving the closure member 54. The control signal lines from/to the CPU 97 are shown in Figure 7 by a dashed line.

In one embodiment, the electronic control unit controls the operation of the grinder unit of the grinding device 2, through the grinder motor 21. Namely, the control unit 21a is configured to start a grinding operation and stop a grinding operation when the weight of the ground coffee attains a default value or when a default time interval expires. The default time and/or weight values may be either selected by the user or stored in the control unit. The default values, hereinafter also referred to as nominal values can be entered as input data that are received by the CPU or stored in the CPU. The nominal weight and/or time values may vary according to the desired coffee recipe.

The grinding-dosing machine may be equipped with means, known per se, for recognizing a filter holder, and for associating different default coffee weight values with different filter holders. Figure 8 shows an exemplary filter holder 100, equipped with an identification means (schematically shown), which is preferably removable, and is preferably placed on the basket 102 for recognition by a recognition sensor. While the identifier is shown in a lateral region of the basket of the filter holder, the identifier can be placed on the front of the basket 102 (not shown in Figure 8). The identification means 101 may be a color or any other prior art means, such as a barcode, an inductive means or a mechanical code with which the recognition sensor interacts. Referring to figure 6, when the filter holder 100 is placed on the fork 24, a recognition sensor (not shown), e.g. placed below the sealing flange 103, level with the identification means, detects the ground coffee dispensing type, e.g. by total mass to be dispensed and, optionally, the degree of grinding, and a presence sensor (not shown), e.g. of inductive type, detects the presence of the filter holder. As the presence of the filter holder is detected, the presence sensor sends an electronic signal to the control unit that will control a grinding operation according to the dispensing type associated with the identification means.

Preferably, before using the grinding-dosing machine, e.g. during the installation of the machine, an operator calibrates the dosing device for the load cell to read a zero weight value when no ground coffee are present in the dispensing conduit. Preferably, the operator sets a a nominal ground coffee weight.

In one embodiment, the operator enters a nominal weight value as an input data into the user interface 98 and starts a grinding operation for an initial configuration of the machine. The control unit is configured to receive the nominal weight value entered by the user and, once the grinding operation has been selected, to carry out the operation with the plate in the closed position and to check the weight of ground coffee on the plate, as the operation is being carried out. When the weight of the coffee that falls on the plate attains the nominal weight value that has been previously set, the grinding operation is stopped and the control unit is configured to determine the grinding time associated with the nominal weight value and to store this value as a nominal grinding time value. Once the nominal weight values and the nominal grinding time have been stored, the control unit is configured to calculate a nominal mass throughput of ground coffee, e.g. in grams per second, based on these values.

The control unit may be configured to store a plurality of nominal weights of ground coffee associated with a corresponding plurality of nominal grinding times, based on which the control unit determines a respective plurality of mass throughputs, e.g depending on the type of beverage to be prepared. If a plurality of types of beverages are provided, the control unit is configured to create an input data table, listing nominal weight values and associated nominal mass throughputs (or grinding times), for each type of beverage, as acquired as a result of respective calibration operations.

The selection of the type of beverage and hence the selection of the nominal weight, time and mass throughput values, may be made manually or through automatic recognition of the filter holder, as described above.

After the initial configuration of the grinding-dosing machine, and according to one embodiment of the machine, the latter works "on demand" and the dosing device operates with the ground coffee dispensing conduit always open, namely the control unit is configured to hold the plate in the open position. In this mode, the dispensed dose is a function of the grinding time stored in the machine for a particular type of beverage.

The Applicant found that during use of the grinding-dosing machine in a dispensing mode that relies on the grinding time, the operating conditions may change over time of use of the machine, which will allow the dispensed dose to no longer correspond to the desired dose set by a user or stored in the machine.

In certain embodiments, the weight of ground coffee being dispensed is controlled . In an "on demand" mode of use of the grinding-dosing machine, such control may be actuated after a given time of use of the machine (e.g. after a few hours, one day or one week). The weight of the dispensed dose may be controlled in a single dispensing operation or over a plurality of dispensing operations.

It shall be understood that a person skilled in the art can make many changes equivalent to the described embodiments without departing from the scope of the accompanying claims.

## Claims

1. A grinding-dosing machine (1) comprising:
- a grinding device (2), configured to grind coffee beans and deliver ground coffee, said grinding device (2) comprising a grinder unit (21a), and a grinder motor (21) for driving said grinder unit (21a),
- a dosing device (3) for ground coffee, configured to receive the ground coffee delivered by the grinding device (2),
**characterized in that** said dosing device (3) for ground coffee comprises:
- a main body (5), comprising:
a) a dispensing conduit (51) with an inlet (52) configured to receive ground coffee, and an outlet (53) configured to allow ground coffee to be discharged from the dispensing conduit (51), the ground coffee falling by gravity through the inlet (52) along the dispensing conduit (51),
b) a closure member (54) movable between a closed position to close the outlet (53) and allow ground coffee to build up in the conduit (51) and an open position, in which ground coffee can be discharged through the outlet (53),
- a load cell (6) having a first free end portion (61) connected to the main body (5) for supporting in suspension the main body (5), the load cell (6) being configured to measure the weight of the ground coffee built up in the dispensing conduit (51) when the closure member (54) is in the closed position, and to generate a measurement signal representative of the measured weight of the ground coffee, and
- an electronic control unit (97) connected to the load cell (6) and the grinder motor (21) and configured to receive the measurement signal generated by the load cell (6) and to turn off the grinder motor (21) as a function of the value of said measurement signal.

2. A grinding-dosing machine (1) as claimed in claim 1, wherein the control unit (97) is configured to turn off the grinder motor (21) when the value of the measurement signal reaches a preset value that is stored in the electronic control unit (97).

3. A grinding-dosing machine (1) according to claim 1 or 2, wherein:
- the load cell (6) comprises a second end portion (62) opposite to the first end portion (61),
- the dosing device (3) comprises a stationary support structure (8), external to the main body (5), the support structure (8) being fixed to the second end portion (62) of the load cell (6) to support the load cell (6) and hence the main body (5).

4. A grinding-dosing machine (1) as claimed in claim 2 or 3, wherein:
- the load cell (6) comprises at least one flexible portion (63) arranged between the first end portion (61) and the second end portion (62),
- said at least one flexible portion (63) being configured to deform under the weight applied to the first end portion (61).

5. A grinding-dosing machine (1) as claimed in any of claims 1 to 4, wherein the main body (5) comprises a load transfer structure (55) attached to the first end portion (61) of the load cell (6) so as to be supported in suspension by the load cell (6), the dispensing conduit (51) and the closure member (54) being fastened to the load transfer structure (55) so as to be supported by the load cell (6) through the load transfer structure (55).

6. A grinding-dosing machine (1) as claimed in claim 5, wherein the first end portion (61) of the load cell (6) comprises a stress application surface (64) on which the load transfer structure (55) is fixed.

7. A grinding-dosing machine (1) as claimed in any of the preceding claims, wherein the load cell (6) is configured to measure the weight of the ground coffee built up in the dispensing conduit (51) by difference between a gross weight of the main body (5), as measured with the ground coffee in the dispensing conduit (51) and a tare weight that is equal to the weight of the main body (5) when no ground coffee is in the dispensing conduit, as measured when the dispensing conduit (51) is empty.

8. A grinding-dosing machine (1) as claimed in any of claims 3 to 7, wherein the stationary support structure (8) comprises a panel (8) and the first end portion (61) of the load cell (6) is cantilevered from said panel (8).

9. A grinding-dosing machine (1) as claimed in claim 8, wherein said main body (5) and said panel (8) comprise at least first endstop stop elements (57, 84, 85), which are configured to limit the mutual displacement of the main body (5) and the panel (8).

10. A grinding-dosing machine (1) as claimed in any of the preceding claims, wherein the closure member (54) comprises a disk configured to close the outlet (53) and to support the ground coffee built up in the conduit (51) when the closure member (54) is in the closed position.

11. A grinding-dosing machine (1) as claimed in any of the preceding claims, wherein the main body (5) comprises a drive system (7) which is coupled to the closure member (54) and is connected to the electronic control unit (97) to move the closure member (54) between the open position and the closed position.

12. A grinding-dosing machine (1) as claimed in any of claims 1 to 11, further comprising a retaining support (24) which is configured to support and/or fasten a filter holder (4), wherein the dosing device (3) is placed above the retaining support (24), with the outlet (53) of the dispensing conduit (51) facing the retaining support (24), for the ground coffee to be discharged into the filter holder (4) when the closure member (54) is in the open position.

13. A grinding-dosing machine as claimed in any of the preceding claims 1 to 12, wherein the electronic control unit (97) is configured to:
- receive input data comprising or associated with a nominal weight value of the ground coffee,
- place the closure member (54) in the closed position;
- perform a grinding operation by actuating the grinder motor (21) to discharge the ground coffee through the dispensing conduit (51) and continuously receiving measurement signals from the load cell (6), representative of the weight of the ground coffee built up on the closure member (54), during discharge of the ground coffee through the dispensing conduit (51);
- continuously comparing the weight of the ground coffee with said nominal weight value;
- stopping the grinder unit (21a) when the weight of the ground coffee reaches said nominal weight value.

14. A method of dispensing a dose of ground coffee from grinding-dosing machine (1), the machine comprising a grinding device (2) for grinding coffee beans, in communication with a dispensing conduit (51), having an inlet (52) for receiving the ground coffee from the grinding device and an outlet (53), a closure member (54) arranged at the outlet (53) of the dispensing conduit and movable between an open position for the ground coffee to be discharged from the conduit and a closed position for closing the outlet, and a load cell (6) configured to generate measurement signals representative of the weight of ground coffee built-up in the dispensing conduit when the closure member is in the closed position, the method comprising:
- receiving input data comprising or associated with a nominal weight value of the ground coffee,
- operating the grinding device (2) for discharging ground coffee through the dispensing conduit (51) onto the closure member (54);
- continuously receiving measurement signals representative of the weight of the ground coffee built up on the closure member during discharge of the ground coffee through the dispensing conduit;
- continuously comparing the weight values of the ground coffee, associated with the measurement signals, with the nominal weight value of the ground coffee;
- stopping the grinding device when a weight value measured is equal to the nominal weight value, and
- moving the closure member into the open position, for the ground coffee to be discharged from the dispensing conduit,
wherein the dispensing conduit (51) and the closure member (54) are supported in suspension by the load cell (6).

## Patentansprüche

1. Eine Mahl- und Dosiermaschine (1) aufweisend:
- eine Mahlvorrichtung (2), die zum Mahlen von Kaffeebohnen und zur Ausgabe von gemahlenem Kaffee ausgebildet ist, wobei die besagte Mahlvorrichtung (2) eine Mahleinheit (21a) und einen Mühlenmotor (21) zum Antrieb der besagten Mahleinheit (21a) umfasst,
- eine Dosiervorrichtung (3) für gemahlenen Kaffee, die zur Aufnahme des von der Mahlvorrichtung (2) ausgegebenen gemahlenen Kaffees ausgebildet ist,
**dadurch gekennzeichnet, dass** die besagte Dosiervorrichtung (3) für gemahlenen Kaffee
- einen Hauptkörper (5) umfasst, aufweisend:
a) eine Abgabeleitung (51) mit einem zur Aufnahme von gemahlenem Kaffee ausgebildeten Einlauf (52), und einem Auslauf (53), der dazu ausgebildet ist die Abführung von gemahlenem Kaffee aus der Abgabeleitung (51) zu ermöglichen, wobei der gemahlene Kaffee durch Schwerkraft entlang der Abgabeleitung (51) durch den Einlauf (52) fällt,
b) ein Verschlussteil (54), das zwischen einer Schließposition, die das Verschließen des Auslaufs (53) und die Ablagerung von gemahlenem Kaffee in der Leitung (51) erlaubt, und einer Öffnungsposition verfahrbar ist, in welche der gemahlene Kaffee durch den Auslauf (53) abgeführt werden kann,
- eine Wägezelle (6) mit einem ersten, am Hauptkörper (5) verbundenen freien Endabschnitt (61), um den Hauptkörper (5) hängend zu halten, wobei die Wägezelle (6) dazu ausgebildet ist, das Gewicht des gemahlenen Kaffees zu messen, der sich in der Abgabeleitung (51) abgelagert hat, wenn das Verschlussteil (54) in der Schließposition ist, und ein Messsignal zu erzeugen, das das gemessene Gewicht des gemahlenen Kaffees darstellt, und
- eine mit der Wägezelle (6) und mit dem Mühlenmotor (21) verbundene elektronische Steuereinheit (97), die dazu ausgebildet ist das von der Wägezelle (6) erzeugte Messsignal zu empfangen und den Mühlenmotor (21) in Abhängigkeit vom Wert des besagten Messsignals auszuschalten.

2. Eine Mahl- und Dosiermaschine (1) nach Anspruch 1, wobei die Steuereinheit (97) dazu ausgebildet ist den Mühlenmotor (21) auszuschalten, wenn der Wert des Messsignals einen vorgegebenen, in der elektronischen Steuereinheit (97) hinterlegten Wert erreicht.

3. Eine Mahl- und Dosiermaschine (1) nach Anspruch 1 oder 2, wobei:
- die Wägezelle (6) einen zweiten (62), dem ersten (61) gegenüberliegenden Endabschnitt umfasst,
- die Dosiervorrichtung (3) eine stationäre, außerhalb des Hauptkörpers (5) liegende Tragstruktur (8) umfasst, wobei die Tragstruktur (8) am zweiten Endabschnitt (62) der Wägezelle (6) zur Halterung der Wägezelle (6) und damit des Hauptkörpers (5) befestigt ist.

4. Eine Mahl- und Dosiermaschine (1) nach Anspruch 2 oder 3, wobei:
- die Wägezelle (6) zumindest einen zwischen dem ersten Endabschnitt (61) und dem zweiten Endabschnitt (62) angeordneten flexiblen Abschnitt (63) aufweist,
- der besagte zumindest eine flexible Abschnitt (63) dazu ausgebildet ist, sich unter dem auf den ersten Endabschnitt (61) aufgetragene Gewicht zu verformen.

5. Eine Mahl- und Dosiermaschine (1) nach irgendeinem der Ansprüche von 1 bis 4, wobei der Hauptkörper (5) eine am ersten Endabschnitt (61) der Wägezelle (6) befestigte Lastübertragungsstruktur (55) umfasst, um von der Wägezelle (6) hängend getragen zu werden; die Abgabeleitung (51) und das Verschlussteil (54) an der Lastübertragungsstruktur (55) befestigt sind, um von der Wägezelle (6) durch die Lastübertragungsstruktur (55) getragen zu werden.

6. Eine Mahl- und Dosiermaschine (1) nach Anspruch 5, wobei der erste Endabschnitt (61) der Wägezelle (6) eine Beanspruchungsfläche (64) umfasst, auf welche die Lastübertragungsstruktur (55) befestigt ist.

7. Eine Mahl- und Dosiermaschine (1) nach irgendeinem der vorhergehenden Ansprüche, wobei die Wägezelle (6) dazu ausgebildet ist, das Gewicht des gemahlenen Kaffees, der sich in der Abgabeleitung (51) abgelagert hat, als die Differenz zwischen einem Bruttogewicht des Hauptkörpers (5), bei Messung mit gemahlenem Kaffee in der Abgabeleitung (51), und einem Taragewicht zu messen, das gleich dem Gewicht des Hauptkörpers (5) ist, wenn kein gemahlener Kaffee in der Abgabeleitung vorhanden ist, bei Messung, wenn die Abgabeleitung (51) leer ist.

8. Eine Mahl- und Dosiermaschine (1) nach irgendeinem der Ansprüche von 3 bis 7, wobei die stationäre Tragstruktur (8) eine Platte (8) umfasst und der erste Endabschnitt (61) der Wägezelle (6) an der besagten Platte (8). freitragend angebracht ist.

9. Eine Mahl- und Dosiermaschine (1) nach Anspruch 8, wobei der besagte Hauptkörper (5) und die besagte Platte (8) zumindest erste Endanschlagelemente (57, 84, 85) umfasst, die dazu ausgebildet sind die gegenseitige Verschiebung des Hauptkörpers (5) gegenüber der Platte (8) zu begrenzen.

10. Eine Mahl- und Dosiermaschine (1) nach irgendeinem der vorhergehenden Ansprüche, wobei das Verschlussteil (54) eine Scheibe umfasst, die dazu ausgebildet ist den Auslauf (53) zu schließen und den gemahlenen Kaffee zu halten, der sich in der Leitung (51) abgelagert hat, wenn das Verschlussteil (54) in der Schließposition ist.

11. Eine Mahl- und Dosiermaschine (1) nach irgendeinem der vorhergehenden Ansprüche, wobei der Hauptkörper (5) ein Antriebsystem (7) umfasst, das mit dem Verschlussteil (54) gekoppelt ist und mit der elektronischen Steuereinheit (97) verbunden ist, um das Verschlussteil (54) zwischen der Öffnungsposition und der Schließposition zu bewegen.

12. Eine Mahl- und Dosiermaschine (1) nach irgendeinem der Ansprüche von 1 bis 11, ferner umfassend einen Halter (24), der zur Halterung und/oder Befestigung eines Siebträgers (4) ausgebildet ist, wobei die Dosiervorrichtung (3) oberhalb des Halters (24) positioniert ist und der Auslauf (53) der Abgabeleitung (51) dem Halter (24) gegenüberliegt, um den gemahlenen Kaffee in den Siebträger (4) abzuführen, wenn das Verschlussteil (54) in der Öffnungsposition ist.

13. Eine Mahl- und Dosiermaschine nach irgendeinem der vorhergehenden Ansprüche von 1 bis 12, wobei die elektronische Steuereinheit (97) dazu ausgebildet ist:
- Eingabedaten zu empfangen, die den Gewichtsnennwert des gemahlenen Kaffees enthalten oder damit verbunden sind,
- den Verschlussteil (54) in die Schließposition zu bringen;
- einen Mahlvorgang durch Betätigung des Mühlenmotors (21) auszuführen, um den gemahlenen Kaffee über die Abgabeleitung (51) abzuführen und kontinuierlich Messsignale von der Wägezelle (6) zu empfangen, die stellvertretend für das Gewicht des gemahlenen Kaffees sind, der sich bei der Abführung des gemahlenen Kaffees auf dem Verschlussteil (54) in der Abgabeleitung (51) abgelagert hat;
- einen kontinuierlichen Vergleich des Gewichts des gemahlenen Kaffees mit dem besagten Gewichtsnennwert vorzunehmen;
- die Mahleinheit (21a) abzuschalten, wenn das Gewicht des gemahlenen Kaffees den besagten Gewichtsnennwert erreicht.

14. Eine Methode zur Abgabe einer Dosis gemahlenen Kaffees aus der Mahl-Dosiermaschine (1), wobei die Maschine eine Mahlvorrichtung (2) zum Mahlen von Kaffeebohnen in Verbindung mit einer Abgabeleitung (51) umfasst, aufweisend einen Einlauf (52) zur Aufnahme des von der Mahlvorrichtung gemahlenen Kaffees und einen Auslauf (53), ein am Auslauf (53) der Abgabeleitung angeordnetes Verschlussteil (54), das zwischen einer Öffnungsposition für den Auswurf des gemahlenen Kaffees aus der Leitung, und einer Schließposition zum Verschließen des Auslaufes bewegbar ist, und eine Wägezelle (6), die dazu eingerichtet ist Messsignale zu erzeugen, die stellvertretend für das Gewicht des gemahlenen Kaffees sind, der sich in der Abgabeleitung abgelagert hat, wenn das Verschlussteil in der Schließposition ist, wobei die Methode folgendes umfasst:
- Eingabedaten zu empfangen, die den Gewichtsnennwert des gemahlenen Kaffees enthalten oder damit verbunden sind,
- Betrieb der Mahlvorrichtung (2) zur Abführung des gemahlenen Kaffees aus der Abgabeleitung (51) auf dem Verschlussteil (54);
- kontinuierlichen Empfang von Messsignalen, die stellvertretend für das Gewicht des gemahlenen Kaffees sind, der sich bei der Abführung des gemahlenen Kaffees aus der Abgabeleitung auf dem Verschlussteil abgelagert hat;
- kontinuierlichen Vergleich der den Messsignalen zugeordneten Gewichtswerte des gemahlenen Kaffees mit dem Gewichtsnennwert des gemahlenen Kaffees;
- Abschalten der Mahlvorrichtung, wenn ein gemessener Gewichtswert gleich dem Gewichtsnennwert ist, und
- Verfahren des Verschlussteils in die Öffnungsposition zur Abführung des gemahlenen Kaffees aus der Abgabeleitung,
wobei die Abgabeleitung (51) und das Verschlussteil (54) von der Wägezelle (6) hängend gehalten werden.

## Revendications

1. Appareil de broyage et de dosage (1) comprenant :
- un dispositif de broyage (2), configuré pour broyer des grains de café et fournir du café moulu, ledit dispositif de broyage (2) comprenant une unité de broyage (21a) et un moteur de broyeur (21) pour entraîner ladite unité de broyage (21a),
- un dispositif de dosage (3) pour café moulu, configuré pour recevoir le café moulu fourni par le dispositif de broyage (2),
**caractérisé en ce que** ledit dispositif de dosage (3) pour café moulu comprend :
- un corps principal (5) comprenant :
a) un conduit de distribution (51) ayant une entrée (52) configurée pour recevoir du café moulu et une sortie (53) configurée pour permettre au café moulu d'être évacué du conduit de distribution (51), le café moulu tombant par gravité à travers l'entrée (52) le long du conduit de distribution (51),
b) un élément de fermeture (54) mobile entre une position fermée pour fermer la sortie (53) et permettre au café moulu de s'accumuler dans le conduit (51) et une position ouverte, dans laquelle le café moulu peut être évacué à travers la sortie (53),
- une cellule de pesage (6) ayant une première partie d'extrémité libre (61) reliée au corps principal (5) pour porter en suspension le corps principal (5), la cellule de pesage (6) étant configurée pour mesurer le poids du café moulu accumulé dans le conduit de distribution (51) lorsque l'élément de fermeture (54) est dans la position fermée, et pour générer un signal de mesure représentatif du poids mesuré du café moulu, et
- une unité de commande électronique (97) connectée à la cellule de pesage (6) et au moteur de broyeur (21) et configurée pour recevoir le signal de mesure généré par la cellule de pesage (6) et pour mettre hors tension le moteur de broyeur (21) en fonction de la valeur dudit signal de mesure.

2. Appareil de broyage et de dosage (1) selon la revendication 1, dans lequel l'unité de commande (97) est configurée pour mettre hors tension le moteur de broyeur (21) lorsque la valeur du signal de mesure atteint une valeur prédéfinie qui est stockée dans l'unité de commande électronique (97).

3. Appareil de broyage et de dosage (1) selon la revendication 1 ou 2, dans lequel :
- la cellule de pesage (6) comprend une seconde partie d'extrémité (62) opposée à la première partie d'extrémité (61),
- le dispositif de dosage (3) comprend une structure de support fixe (8), externe au corps principal (5), la structure de support (8) étant fixée à la seconde partie d'extrémité (62) de la cellule de pesage (6) pour porter la cellule de pesage (6) et par conséquent le corps principal (5).

4. Appareil de broyage et de dosage (1) selon la revendication 2 ou 3, dans lequel :
- la cellule de pesage (6) comprend au moins une partie souple (63) agencée entre la première partie d'extrémité (61) et la seconde partie d'extrémité (62),
- ladite au moins une partie souple (63) étant configurée pour se déformer sous le poids appliqué sur la première partie d'extrémité (61).

5. Appareil de broyage et de dosage (1) selon l'une quelconque des revendications 1 à 4, dans lequel le corps principal (5) comprend une structure de transfert de charge (55) fixée à la première partie d'extrémité (61) de la cellule de pesage (6) afin d'être portée en suspension par la cellule de pesage (6), le conduit de distribution (51) et l'élément de fermeture (54) étant fixés à la structure de transfert de charge (55) afin d'être portés par la cellule de pesage (6) par l'intermédiaire de la structure de transfert de charge (55).

6. Appareil de broyage et de dosage (1) selon la revendication 5, dans lequel la première partie d'extrémité (61) de la cellule de pesage (6) comprend une surface d'application de contraintes (64) sur laquelle la structure de transfert de charge (55) est fixée.

7. Appareil de broyage et de dosage (1) selon l'une quelconque des revendications précédentes, dans lequel la cellule de pesage (6) est configurée pour mesurer le poids du café moulu accumulé dans le conduit de distribution (51) par une différence entre un poids brut du corps principal (5), tel que mesuré avec le café moulu dans le conduit de distribution (51) et un poids de tare qui est égal au poids du corps principal (5) lorsqu'il n'y a pas de café moulu dans le conduit de distribution, tel que mesuré lorsque le conduit de distribution (51) est vide.

8. Appareil de broyage et de dosage (1) selon l'une quelconque des revendications 3 à 7, dans lequel la structure de support fixe (8) comprend un panneau (8) et la première partie d'extrémité (61) de la cellule de pesage (6) est en porte à faux par rapport audit panneau (8).

9. Appareil de broyage et de dosage (1) selon la revendication 8, dans lequel ledit corps principal (5) et ledit panneau (8) comprennent au moins des premiers éléments d'arrêt de butée d'extrémité (57, 84, 85), qui sont configurés pour limiter le déplacement mutuel du corps principal (5) et du panneau (8).

10. Appareil de broyage et de dosage (1) selon l'une quelconque des revendications précédentes, dans lequel l'élément de fermeture (54) comprend un disque configuré pour fermer la sortie (53) et pour porter le café moulu accumulé dans le conduit (51) lorsque l'élément de fermeture (54) est dans la position fermée.

11. Appareil de broyage et de dosage (1) selon l'une quelconque des revendications précédentes, dans lequel le corps principal (5) comprend un système d'entraînement (7) qui est couplé à l'élément de fermeture (54) et qui est connecté à l'unité de commande électronique (97) pour déplacer l'élément de fermeture (54) entre la position ouverte et la position fermée.

12. Appareil de broyage et de dosage (1) selon l'une quelconque des revendications 1 à 11, comprenant en outre un support de retenue (24) qui est configuré pour porter et/ou fixer un porte-filtre (4), dans lequel le dispositif de dosage (3) est placé au-dessus du support de retenue (24), avec la sortie (53) du conduit de distribution (51) faisant face au support de retenue (24), pour que le café moulu soit évacué dans le porte-filtre (4) lorsque l'élément de fermeture (54) est dans la position ouverte.

13. Appareil de broyage et de dosage selon l'une quelconque des revendications 1 à 12 précédentes, dans lequel l'unité de commande électronique (97) est configurée pour :
- recevoir des données d'entrée comprenant, ou associées à, une valeur de poids nominal du café moulu,
- placer l'élément de fermeture (54) dans la position fermée ;
- réaliser une opération de broyage par l' actionnement du moteur de broyage (21) pour évacuer le café moulu à travers le conduit de distribution (51) et recevoir en continu des signaux de mesure provenant de la cellule de pesage (6), représentatifs du poids du café moulu accumulé sur l'élément de fermeture (54), au cours de l'évacuation du café moulu à travers le conduit de distribution (51) ;
- comparer en continu le poids du café moulu avec ladite valeur de poids nominal ;
- arrêter l'unité de broyeur (21a) lorsque le poids du café moulu atteint ladite valeur de poids nominal.

14. Procédé de distribution d'une dose de café moulu à partir d'un appareil de broyage et de dosage (1), l'appareil comprenant un dispositif de broyage (2) pour broyer des grains de café, en communication avec un conduit de distribution (51), ayant une entrée (52) pour recevoir le café moulu provenant du dispositif de broyage et une sortie (53), un élément de fermeture (54) agencé à la sortie (53) du conduit de distribution et mobile entre une position ouverte pour que le café moulu soit évacué du conduit et une position fermée pour fermer la sortie, et une cellule de pesage (6) configurée pour générer des signaux de mesure représentatifs du poids de café moulu accumulé dans le conduit de distribution lorsque l'élément de fermeture est dans la position fermée, le procédé consistant à :
- recevoir des données d'entrée comprenant, ou associées à, une valeur de poids nominal du café moulu,
- actionner le dispositif de broyage (2) pour évacuer du café moulu à travers le conduit de distribution (51) sur l'élément de fermeture (54) ;
- recevoir en continu des signaux de mesure représentatifs du poids du café moulu accumulé sur l'élément de fermeture pendant l'évacuation du café moulu à travers le conduit de distribution ;
- comparer en continu les valeurs de poids du café moulu, associées aux signaux de mesure, avec la valeur de poids nominal du café moulu ;
- arrêter le dispositif de broyage lorsqu'une valeur de poids mesurée est égale à la valeur de poids nominal, et
- déplacer l'élément de fermeture dans la position ouverte pour que le café moulu soit évacué du conduit de distribution,
dans lequel le conduit de distribution (51) et l'élément de fermeture (54) sont portés en suspension par la cellule de pesage (6).
